# EUROPEAN PATENT SPECIFICATION

(11) **EP 3 051 846 B1**
(45) Date of publication and mention of the grant of the patent: **10.04.2019**
(21) Application number: 14797128.7
(22) Date of filing: 23.05.2014
(51) Int. Cl.: H04W 4/06, H04W 4/08, H04W 76/40

(54) **CLUSTER COMMUNICATION METHOD AND USER EQUIPMENT**
CLUSTERKOMMUNIKATIONSVERFAHREN UND BENUTZERVORRICHTUNG
PROCÉDÉ DE COMMUNICATION DE GROUPE ET ÉQUIPEMENT UTILISATEUR

(30) Priority: 08.11.2013 CN 201310557112
(43) Date of publication of application: 03.08.2016
(73) Proprietor: ZTE Corporation, Shenzhen, Guangdong 518057 (CN)
(72) Inventor: XU, Hui, Shenzhen Guangdong 518057 (CN); MAO, Lei, Shenzhen Guangdong 518057 (CN); MA, Zijiang, Shenzhen Guangdong 518057 (CN); GAO, Youjun, Shenzhen Guangdong 518057 (CN)
(74) Representative: Schröer, Gernot H.
(86) International application number: PCT/CN2014/078321
(87) International publication number: WO 2014/183698

(56) References cited:
- CN-A- 101 163 260
- CN-A- 101 743 717
- CN-A- 101 820 585
- US-A1- 2012 314 641
- US-A1- 2013 121 133
- US-B1- 7 573 837
- NEC CORPORATION: "Enabling Service Continuity for Group Communication", 3GPP DRAFT; R2-134207_GCSE_SC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. San Francisco, USA; 20131110 - 20131114 1 November 2013 (2013-11-01), XP050753142, Retrieved from the Internet: URL:http://www.3gpp.org/ftp/tsg_ran/WG2_RL 2/TSGR2_84/Docs/ [retrieved on 2013-11-01]

## Description

### Technical Field

The present invention relates to wireless communication technologies, and more particularly, to a cluster communication method and a user equipment.

### Background of the Related Art

The cluster communication system is a private wireless communications system developed to meet the dispatching needs of industry users and facing specific industry applications, in the system, a large number of wireless users share a small amount of radio channels, the system takes the dispatching as the main application, and it is a versatile, high-performance wireless communication system. The cluster communication system has a wide range of applications fields such as government departments, public safety, emergency telecommunications, electricity, civil aviation, petrochemical industry, military and etc..

The cluster communication system experienced a development process similar to the cellular mobile communication system. The first generation of cluster system is an analog cluster communication system and primarily supports voice communications. One of the first analog cluster communication systems entering into China is Nokia's Actionet system, which uses the MPT-1327 signaling and is applied in the 450MHz band. Since then, the F.A.S.T in Japan and the Smartnet of Motorola in the United States enter into China and occupy more than 80% market share of the cluster market in a long term.

The second generation of cluster communication is a narrow-band digital cluster communication system, it has risen in the 1990s, and has started being deployed in China since 2004, and is currently the most widely used domestic cluster communication system. The digital cluster communication system supports voice and low-speed data (up to 28.8kbps) communications, and the representative systems are Terrestrial Trunked Radio (TETRA) system defined by the European Telecommunications Standards Institute (ETSI), Integrated digital enhanced networks (iDEN) system of U.S. Motorola, Global open Trunking architecture (GoTa) system developed by ZTE based on the CDMA1X, and the GT800 system developed by Huawei technologies Co., Ltd. Based on the GSM. From a domestic perspective, the TETRA network has been growing fastest in the last two or three years, and the number of TETRA networks accounts for about over two-thirds or more in the digital cluster communication networks established in the nationwide.

The feature of the cluster system different from the public system is that the cluster system requires very effective dispatching feature, and requires that the network has high reliability and security.

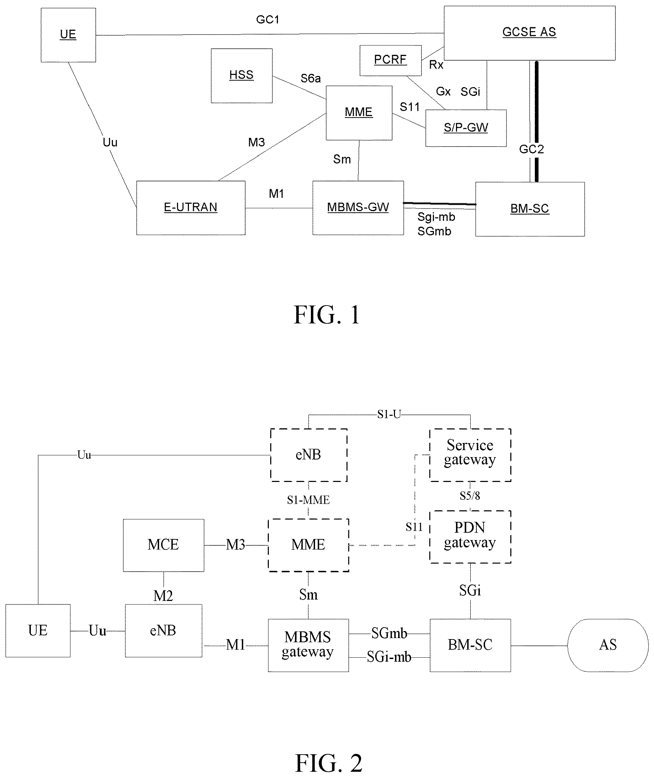

Call control: according to the user's service request, a service bearer is established, maintained and released between a calling party and a called party;
authentication and authorization: support authentication and authorization, wherein the authentication functions comprise: the network side authenticating the terminal, and the two-way authentication of the network side authenticating the terminal and the terminal authenticating the network side;
fault weakening: when a link between the network side and the base station or an internal network element at the network side fails, the base station can provide limited cluster services to user terminals under its coverage range;
Network interconnection capability: the capability of interconnecting with Public Switched Telephone Network (PSTN), public mobile communication systems (GSM/CDMA, TD-LTE, etc.), IP phones, and other cluster communication systems. The cluster communication in the 3GPP LTE is called group communication service enabler (GCSE), and FIG. 1 shows the system architecture of the LTE GCSE.

In order to effectively utilize the mobile network resources, the 3rd Generation Partnership Project (3GPP) proposed the Multimedia Broadcast Multicast Service (MBMS), and this service is a technology of transferring data from one data source to multiple target mobile terminals, realizing the network (including the core network and access network) resources sharing, and improving the network resources (in particular air interface resources) utilization. The MBMS service defined in 3GPP can not only achieve the multicast and broadcast of low rate plain text messages, but also achieve the broadcast and multicast of high-speed multimedia services, and provides a variety of enriched video, audio and multimedia services, which undoubtedly conforms to the trend of future mobile data development and provides a better service prospect for the 3G development.

The feature of the MBMS service is a large amount of data traffic, and it takes a long time for the mobile terminal to receive, and the average data rate is constant. The abovementioned feature determines that the scheduling and control signaling configurations of the MBMS service are semi-static, that is, the scheduling information and the control signaling information of the MBMS service remain unchanged for a "long-term", the information is sent periodically via the MBMS Control Channel (MCCH), and is collectively referred to as MCCH information. The evolved MBMS (eMBMS) system may have a plurality of MCCHs, and each MCCH corresponds to a different MBSFN area, and it only carries control information of the MBMS service sent in the corresponding MBSFN area. FIG. 2 shows the schematic diagram of the MBMS structure in the LTE.

The industry is currently discussing the possibility of using the MBMS technology to realize the cluster communication.

The following problems in the related art are found in the research and practice of the related art:
for example, when the UE that receives the cluster service via the MBMS bearer moves out of the MBMS coverage area or the MBSFN signal quality is poor, how to notify the cluster application server? How to protect the cluster service continuity? How does the cluster communication of the MBMS bearer switch to the cluster communication of the unicast bearer? And so on. That is, when the UE that receives the cluster service via the MBMS bearer no longer meets the conditions of receiving the cluster service via the MBMS bearer, how to realize the cluster communication? This problem still has no solution in the related art.

US 2013/121133 A1 discloses a group communication scheme in a mixed casting services wireless communication system. An embodiment detects a loss of multicast coverage at a user equipment, notifies a server of the loss of multicast coverage, wherein the server is configured to provide a desired multicast communication, and requests that communications related to the desired multicast communication be conducted on a unicast service using application layer signaling independent of link layer signaling.

US 2012/314641 A1 discloses a system, which may receive, from a user device, a request to receive content via a first base station, where the content was previously being received as multicast content via a second base station; determine, in response to the request, whether the first base station can process multicast content; transmit a copy of the content to the user device via the first base station as multicast content, based on a determination that the first base station can process multicast content; and transmit the content to the user device via the first base station as unicast content, based on a determination that the first base station cannot process multicast content.

### Summary of the Invention

To solve the technical problem, the embodiment of the present invention is to provide a cluster communication method according to claim 1 and a user equipment according to claim 5 to solve the problem of how to realize the cluster communication when the cluster user equipment (UE) does not meet conditions of receiving a cluster service via an MBMS bearer.

With the technical solution according to the embodiment of the present invention, when a cluster user equipment (UE) does not meet conditions for receiving a cluster service via an MBMS bearer, it can achieve the unicast transmission of cluster communication, guarantee the continuity of the cluster communication service, and reduce the impact on the radio access network.

### Brief Description of the Drawings

FIG. 1 is a schematic diagram of a relevant cluster communication system architecture;
FIG. 2 is a schematic diagram of a relevant MBMS communication architecture;
FIG. 3(a) is a flow chart of a cluster communication method in accordance with an embodiment of the present invention;
FIG. 3(b) is a flow chart of another cluster communication method in accordance with an embodiment of the present invention;
FIG. 4 is a flow chart of a cluster communication method in a first scenario in accordance with an embodiment of the present invention;
FIG. 5 is a flow chart of a cluster communication method in a second scenario in accordance with an embodiment of the present invention;
FIG. 6 is a schematic diagram of the structure of a system for transmitting cluster communication service in accordance with an embodiment of the present invention;
FIG. 7 is a schematic diagram of the structure of a user equipment for transmitting cluster communication service in accordance with an embodiment of the present invention;
FIG. 8 is a schematic diagram of the structure of a network side device for transmitting cluster communication service in accordance with an embodiment of the present invention.

### Preferred Embodiments of the Invention

Hereinafter, in conjunction with the accompanying drawings, the technical solution of the present invention will be described in detail. In the case of no conflict, embodiments and features in the embodiments of the present application may be arbitrarily combined with each other.

### The first embodiment

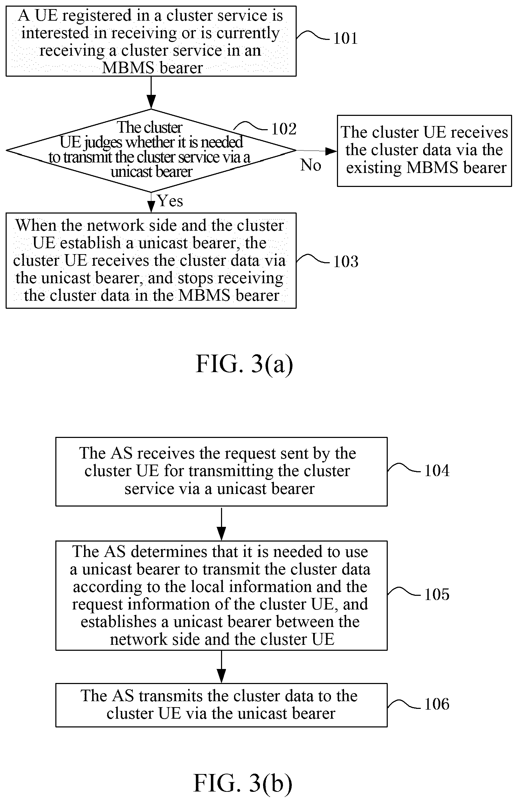

The present embodiment provides a cluster communication method, and as shown in FIG. 3 (a), it comprises the following operations:
in step 101, a UE registered in a cluster service (GCSE group communication), referred to as a cluster UE, is interested in receiving or is currently receiving a cluster service in an MBMS bearer;
at first, it should be noted that, the MBMS in the present invention refers to an evolved MBMS, that is, eMBMS.

Prior to the step 101, the cluster UE first registered in the GCSE AS. Thus, the GCSE AS may know the total number of UEs joined in the cluster service. The UE being interested in receiving refers to the UE being ready to receive.

The UE being currently receiving the cluster service refers to: the UE being receiving the cluster service via the MBMS bearer in the MBMS coverage area. The UE has the cluster communication capability and the MBMS capability, and comprises a user terminal and a scheduling station, the user terminal comprises a handheld terminal, a vehicle-mounted station and a fixed station; the scheduling station comprises a wired scheduling station and a wireless scheduling station. The user terminal and the wireless scheduling station are connected to the LTE network via the air interface, and the wired scheduling station is connected to the network subsystem through a cluster gateway.

The MBMS bearer comprises a core network bearer (i.e. EPC bearer) and an air interface bearer, the RAN (base station eNB or MCE) configures the MBMS air interface resources and sends the MBMS configuration information and the cluster data at the air interface.

In the present embodiment, the cluster UE being interested in receiving or being currently receiving the cluster service in the MBMS bearer refers to:
the cluster UE being interested in receiving or being currently receiving the cluster service via the MBMS bearer in the MBMS coverage area.

In step 102, the cluster UE judges whether it is needed to transmit the cluster service via a unicast bearer;
the process of the cluster UE judging whether it is needed to transmit the cluster service via a unicast bearer is as follows:
the cluster UE determines that it is needed to transmit the cluster service via the unicast bearer when the cluster UE itself judges that any one of the following six conditions can be met:
1. The UE leaves the MBSFN area bearing the cluster service, that is, the UE is not within the MBSFN area coverage. In real networks, different cluster services can be configured in different MBSFN areas, for convenience of description, the MBSFN area mentioned in the embodiments of the present invention refers to: the MBSFN area bearing the cluster service in step 101.
   The method for the cluster UE judging whether the UE itself leaves the MBSFN area comprises:
   1) the UE does not find out or is not able to read out the related system broadcast message for configuring the MBMS parameters (such as SIB13 or SIB15);
   2) or the UE does not find out or is not able to read the MCCH in the local cell;
   3) or the UE finds out that the MBMS service area (SAI, service area ID) to which the cell belongs does not belong to the broadcast area of the cluster service by reading out the system broadcast message (such as SIB15) in the local cell.
   4) or the UE does not have configuration parameters of the cluster service in the MCCH read out from the local cell.
2. The cluster UE determines that the MBSFN signal quality is poor.
   The UE judges that the received MBSFN signal quality is not good based on the MBMS signal measurement in the MBSFN area.
3. The cluster UE is located in a border cell of the MBSFN area (the UE reads out the identification of the border cell of the MBSFN area).
   The border cell of the MBSFN area refers to the border cell of the MBSFN area bearing the cluster service in step 101;
   The border cell indicates the border identification of the MBSFN area via a broadcast message; or the network indicates the border identification of the MBSFN area of the UE via a dedicated signaling.
4. The cluster UE itself does not have the MBMS capability;
5. The cluster UE applies to the network (eg: GCSE AS) for the speaking right, then sends uplink data after obtaining the speaking right;
   a user first receives downlink group call data via the MBMS bearer;
   the UE establishes a unicast bearer and applies to the AS for the speaking right;
   the UE sends the uplink data after obtaining the speaking right;
   At the end of the uplink data transmission, the UE can negotiate with the AS about whether to continue receiving data via the unicast bearer or return back to the MBMS bearer receiving mode.
6. The cluster UE considers other reasons for establishing a unicast bearer, such as, a high-priority task, a delay-sensitive task, and so on.

In step 102, if it is needed to transmit the cluster service via the unicast bearer, it is to send a request for transmitting the cluster service via the unicast bearer to the cluster application server (AS);
in step 103, when the network side AS establish a unicast bearer with the cluster UE, the cluster UE receives the cluster data via the unicast bearer, and stops receiving the cluster data in the MBMS bearer.

When the network side AS does not establish a unicast bearer with the cluster UE, the cluster UE receives the cluster data via the existing MBMS bearer.

The cluster UE sending a request for transmitting the cluster service via a unicast bearer to the AS comprises: when the cluster UE switches from the idle state to the connected state, the cluster UE sends a unicast bearer establishment request to the AS through an application layer signaling or an EPS signaling, wherein, the EPS signaling comprises an air interface signaling and an EPC signaling.

The abovementioned method mainly describes the cluster communication process from the cluster UE side, and the present embodiment further introduces another cluster communication method, which is mainly described from the network side, and the method is shown in FIG. 3 (b), comprising:
in step 104, the cluster application server (AS) receives the request sent by the cluster user equipment (UE) for transmitting the cluster service via a unicast bearer;
in step 105, the AS determines that it is needed to use a unicast bearer to transmit the cluster data according to the local information and the request information of the cluster UE, and establishes a unicast bearer between the network side and the cluster UE;
in the present embodiment, after the network side (AS) receives the abovementioned request from the UE, it judges whether it is needed to establish a unicast bearer for the UE, and the judging method is: judging whether there is an available MBMS bearer (i.e. multicast bearer, a multicast bearer relative to the unicast bearer, also known as PTM (point-to-multipoint) bearer) or an MBMS bearer that can be established; an available MBMS bearer refers to that the UE is in the MBMS coverage area (the MBMS coverage area is the MBSFN area), the cluster service has started but is not over yet; an MBMS bearer that can be established refers to that the UE is in the MBMS coverage area, but the cluster service has not started yet. If there is no available MBMS bearer or an MBMS bearer that can be established, it is to establish a unicast bearer, if there is an available MBMS bearer or an MBMS bearer that can be established, it is to continue using the MBMS bearer.

In addition, if the AS determines that it is not needed to use the unicast bearer to transmit the cluster data based on the local information and the request information of the cluster UE, it may transmit the cluster data to the cluster UE through the existing Multimedia Broadcast Multicast Service (MBMS) bearer.

In step 106, the AS transmits the cluster data to the cluster UE via the unicast bearer.

The AS determines whether to use the unicast bearer based on the local information and the request information of the UE, if the UE indicates that it is out of the MBMS coverage area and the cluster service in the AS has not completed, the AS selects to send the cluster service via the unicast bearer.

The UE receives the cluster data via the unicast bearer, and stops receiving the cluster data in the MBMS bearer.

In the following, the embodiment of the cluster service process will be used to illustrate the solution of the present invention.

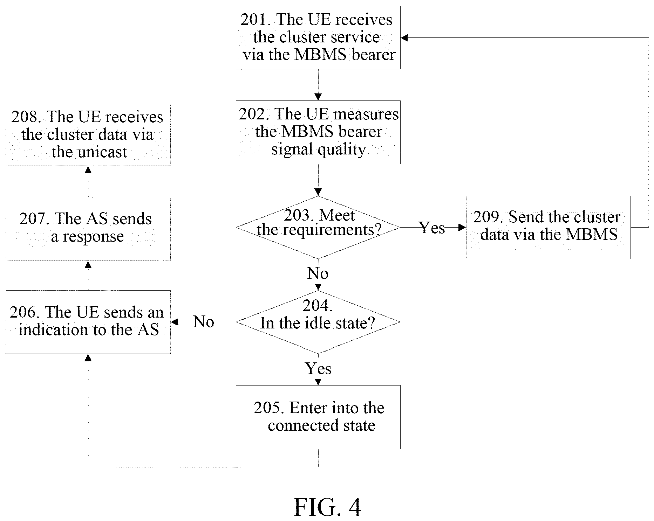

For a scenario in which the UE receives the cluster service via the MBMS bearer, the cluster communication implementation method is shown in FIG. 4, comprising:
in step 201, the UE receives the cluster service via the MBMS bearer.

The UE is in the MBMS coverage area and receives the cluster service via the MBMS bearer.

In step 202, the UE measures the MBMS signal quality.

The UE measures the received MBMS bearer signal quality, wherein the parameters for the MBMS bearer signal quality comprise one or more of any of the following:
MBSFN reference signal receiving power (RSRP), MBSFN reference signal receiving quality (RSRQ), MBSFN received signal strength indicator (RSSI)\MBSFN reference signal signal-to-noise ratio (RS SNR), MBSFN block error rate (BLER).

The measurement method is any of the following: periodic measurement, event triggering measurement or a combination of the abovementioned two.

In step 203, the UE judges whether the MBMS signal quality meets the requirements, if yes, the process proceeds to step 209, otherwise, it proceeds to step 204.

The UE judges whether the MBMS signal quality meets the cluster service reception requirements, which can be illustrated by specifying the threshold requirements for an example. The specified threshold refers to a predetermined value, such as a threshold value specified by the OAM, there may be different specified thresholds for different measurement parameters. If the measured values of the parameters MBSFN RSRP, MBSFN RSRQ, MBSFN RSSI, MBSFN RS SNR are lower than specified thresholds, or if the measured value of the parameter MBSFN BLER is greater than the specified threshold, the requirements are not met, otherwise, the requirements are met.

In step 204, whether is the UE in the idle state, if yes, then the process proceeds to step 205, otherwise, proceeds to step 206.

The UE may be in the idle state or the connected state.

In step 205, the UE enters into the connected state.

If the UE is in the idle state, then the UE enters into the connected state.

In step 206, the UE sends a request message to the cluster application server (AS).
the UE notifies the AS via an application layer signaling or an EPS signaling to request for establishing a unicast bearer to send the cluster data.

In step 207, the AS sends a response message to the UE.

The AS sends a response message to the UE according to the received request information route: if the indication message is received via the application layer signaling, the response message is also sent via the application layer signaling, otherwise, the AS sends the response message via the EPS signaling.

In step 208, the UE receives the cluster service data from the AS via the unicast bearer.

The AS sends the cluster data via the unicast bearer, and the UE receives the cluster data via the unicast bearer.

In step 209, the AS continues to send the cluster data via the MBMS bearer.

The UE is located in the MBMS coverage area, the AS continues to send the cluster data via the MBMS bearer, and the UE continues to measure the MBMS signal quality.

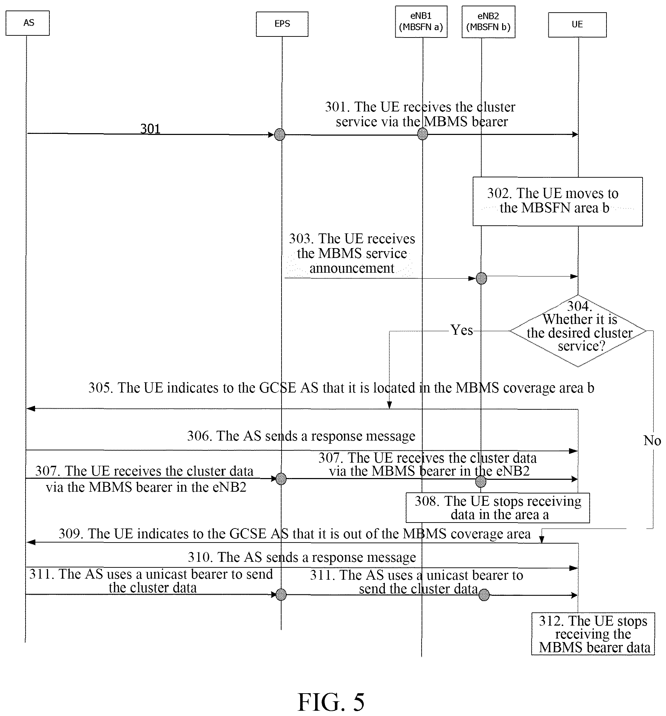

For a scenario in which the UE moves from the MBMS coverage area a to the MBMS coverage area b, the cluster communication implementation method is shown in FIG. 5, wherein the eNB1 is located in the area a, and the eNB2 is located in the area b, the method comprises:
in step 301, the UE uses the MBMS bearer to receive the cluster service via the eNB1.

The UE respectively registers in the AS and the MuSE, the UE determines the required MBMS service according to a mapping relationship of the required cluster service ID and the TMGI, and receives the cluster service via the MBMS bearer.

The UE receives or is ready to receive the cluster service.

In step 302, the UE moves to the MBMS coverage area b.

The UE detects that it moves out of the MBMS coverage area a, and detects moving to another MBMS coverage area b, and the abovementioned detection is determined by the UE measuring and receiving the MBMS-related system broadcast message or MBMS control message, and if the MBSFN signal quality measured by the UE does not satisfy the requirements, it is determined that the UE moves out of the MBMS coverage area a, at the same time, if the system message SIB13, SIB15 or MCCH related to the area b is received, it is determined that the UE moves to the MBMS coverage area b.

In step 303, the UE receives the MBMS service announcement message in the area b.

The UE receives the MBMS service announcement message in the area b, the announcement message is sent via the MBMS bearer or the unicast bearer.

In step 304, the UE judges whether it is the desired cluster service, if yes, then the process proceeds to step 305, otherwise, proceeds to step 309.

The UE judges whether it is the required cluster service based on the received announcement message, preferably, the UE may judge based on whether there is a mapping relationship between the TMGI locally stored in the UE and the cluster service ID, if there is a mapping relationship, it is the required cluster service, and if there is no mapping relationship, it is not the required cluster service.

In step 305, the UE sends an indication message to the AS for indicating that it is in the MBMS coverage area b.

The UE enters into the connected state, and sends an indication message to the AS for indicating that it is located in the MBMS coverage area b, the indication message is sent via an application layer signaling or an EPS signaling.

In step 306, the AS sends a response message to the UE.

The response message is sent via an application layer signaling or an EPS signaling.

In step 307, the UE receives the cluster service via the MBMS bearer in the eNB2.

The MBMS service sent by the eNB2 is the cluster service required by the UE, the UE receives the cluster service via the MBMS bearer in the eNB2.

In step 308, the UE stops receiving the MBMS information in the area a.

The UE stops receiving the MBMS information in the area a in the eNB2, considering that the MBMS is transmitted in the MBSFN mode, the UE may receive the MBMS data in the area a at the edge of eNB1 (even within the eNB2), because the UE has received the cluster service via the MBMS bearer in the area b, then it stops receiving the data in the area a.

In step 309, the UE sends a message to the AS for indicating that it is out of the MBMS coverage area.

The UE cannot receive the required cluster service in the area b, at this time if the UE is in the RRC idle state, then the UE switches to the RRC connected state; the UE sends a message to the AS for indicating that it is out of the MBMS coverage area via an application layer signaling or an EPS signaling.

In step 310, the AS sends a response message to the UE.

The AS sends a response message to the UE via the application layer signaling or the EPS signaling.

In step 311, the AS sends the cluster service to the UE via a unicast bearer.

The AS establishes a unicast bearer to the UE through the eNB2, and sends the required cluster service to the UE via the unicast bearer.

In step 312, the UE stops receiving the MBMS data in the area b.

The UE stops receiving the MBMS information in the area b, it should be noted that: the abovementioned MBMS information does not comprise the system message sent by the eNB2.

### The second embodiment

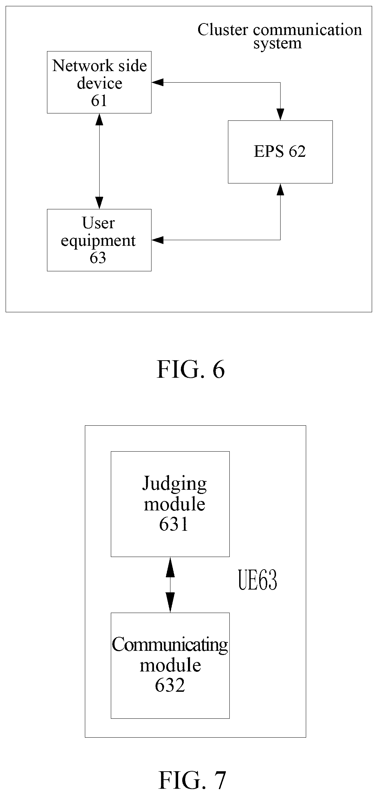

The present embodiment provides a cluster communication system for realizing the abovementioned method for transmitting cluster communication, and it comprises at least user equipment (63) and network side device (61), wherein, it may also comprise EPS (62) provided for forwarding messages and cluster data between the 61 and the 63, in this case, the system architecture is shown in FIG. 6.

In the following, it is to first introduce a user equipment (63) provided in the present embodiment, as shown in FIG. 7, the user equipment (63) comprises the following modules:
A judging module (631), configured to: when the local UE is interested in receiving or is currently receiving a cluster service in a multimedia broadcast multicast service (MBMS) bearer, judge whether it is needed to transmit the cluster service via a unicast bearer;
in the present embodiment, the cluster service in the MBMS bearer which the cluster UE is interested in receiving or is currently receiving refers to: a cluster service which the local cluster UE is interested in receiving or is currently receiving via the MBMS bearer within the MBMS coverage area.

Wherein, the judging module being configured to judge whether it is needed to transmit the cluster service via the unicast bearer refers to:
determining that it is needed to transmit the cluster service via the unicast bearer when any of the following conditions is met:
the local cluster UE leaving the MBSFN area of the cluster service which the UE is interested in receiving or is currently receiving; or
the local cluster UE determining that the MBSFN signal quality is poor; or
the local cluster UE being located in a border cell of the MBSFN area bearing the cluster service which the UE is interested in receiving or is currently receiving; or,
the local cluster UE itself not having the MBMS capability; or
the local cluster UE applying to the network for the speaking right, to send uplink data after obtaining the speaking right; or
other reasons considered by the local cluster UE for establishing a unicast bearer.

The local cluster UE leaving the MBSFN area of the cluster service which the UE is interested in receiving or is currently receiving refers to:
the local cluster UE not finding out or being unable to read out a system broadcast message for configuring MBMS parameters within the local cell; or
the local cluster UE not finding out or being unable to read out the MCCH within the cell; or
the local cluster UE finding out that the MBMS service area to which the local cell belongs does not belong to the broadcast area of the cluster service by reading out the system broadcast message in the local cell; or,
the local cluster UE not having configuration parameters of the cluster service in the MCCH read out from the local cell.

The other reasons for establishing a unicast bearer comprises at least one of the high-priority task and the delay-sensitive task.

A communicating module (632), configured to: when the judging module judges that it is needed to transmit the cluster service via a unicast bearer, send a request to a cluster application server (AS) for transmitting the cluster service via a unicast bearer; after the local UE establishes a unicast bearer with the application server (AS) which is a corresponding network side device, receive the cluster data via the unicast bearer, and stop receiving the cluster data in the MBMS bearer.

Wherein, the communicating module is further configured to: if the local UE does not establish a unicast bearer with the application server (AS) which is the corresponding network side device, receive the cluster data via the existing MBMS bearer.

The communicating module sending a request to the AS for transmitting the cluster service via a unicast bearer refers to: when the local UE switches from the idle state to the connected state, the local UE sending a unicast bearer establishment request to the AS via an application layer signaling or an EPS signaling, wherein, the EPS signaling comprises an air interface signaling and an EPC signaling.

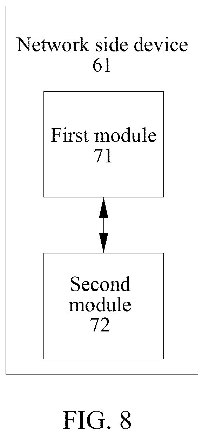

Furthermore, the present embodiment further provides a network side device (61), and as shown in FIG. 8, the network side device comprises:
A first module (71), configured to: receive a request for transmitting a cluster service via a unicast bearer sent by a cluster UE;
A second module (72), configured to: if it is determined that it is needed to use the unicast bearer to transmit cluster data based on the local information and the request information of the cluster UE, establish a unicast bearer between the network side and the cluster UE, and transmit the cluster data to the cluster UE via the unicast bearer.

Wherein, the second module (72) is further configured to: if it is determined that it is not needed to use the unicast bearer to transmit the cluster data based on the local information and the request information of the cluster UE, transmit the cluster data to the cluster UE via the existing MBMS bearer.

The second module(72) being configured to determine that it is needed to use a unicast bearer to transmit the cluster data based on the local information and the request information of the cluster UE refers to:
judging whether there is an available MBMS bearer or an MBMS bearer that can be established, if there is no available MBMS bearer or an MBMS bearer that can be established, determining that it is needed to use the unicast bearer to transmit the cluster data;
wherein, the available MBMS bearer refers to that the cluster UE is in the MBMS coverage area, and the cluster service has started but is not over yet;
the MBMS bearer that can be established refers to that the cluster UE is in the MBMS coverage area, but the cluster service has not started yet.

In practical applications, preferably, the abovementioned network side device can be a cluster application server (AS).

Those ordinarily skilled in the art can understand that all or some of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

The above description is only preferred embodiments of the present invention, and is not intended to limit the protection scope of the embodiments of the present invention.

### Industrial Applicability

With the technical solution according to the embodiment of the present invention, when a cluster user equipment (UE) does not meet conditions for receiving a cluster service via an MBMS bearer, it can achieve the unicast transmission of cluster communication, guarantee the continuity of the cluster communication service, and reduce the impact on the radio access network.

## Claims

1. A cluster communication method, wherein the method comprises:
when a cluster user equipment (63), UE, is currently receiving a cluster service in a multimedia broadcast multicast service, MBMS, bearer, the cluster UE (63) judging whether it is needed to transmit the cluster service via a unicast bearer, and if yes, sending a request for transmitting the cluster service via a unicast bearer to a cluster application server (61), AS, at a network side; and
after the cluster AS (61) accepts the request of the cluster UE (63) and if the cluster AS (61) establishes a unicast bearer with the cluster UE (63), the cluster UE (63) receiving cluster data via the unicast bearer, wherein, after the cluster AS (61) accepts the request of the cluster UE (63) and if the cluster AS (61) establishes a unicast bearer with the cluster UE (63), the cluster UE (63) stops receiving cluster data in the MBMS bearer and being **characterised in that**
the step (102) of the cluster UE (63) judging whether it is needed to transmit the cluster service via a unicast bearer comprises:
the cluster UE (63) determining that it is needed to transmit the cluster service via a unicast bearer when judging that the following condition is satisfied:
the cluster UE (63) applying to the network for a speaking right, to send uplink data after obtaining the speaking right.

2. The cluster communication method of claim 1, wherein, the method further comprises:
if the cluster application server (61) which is a network side device does not establish a unicast bearer with the cluster UE (63), the cluster UE (63) receiving the cluster data via the MBMS bearer.

3. The cluster communication method of claim 1, wherein, a cluster service in an MBMS bearer which the cluster UE (63) is currently receiving refers to:
a cluster service which the cluster UE (63) is currently receiving via the MBMS bearer within the MBMS coverage area.

4. The cluster communication method of claim 1, wherein, the step of the cluster UE (63) sending a request for transmitting the cluster service via a unicast bearer to the cluster AS (61) comprises:
the cluster UE (63) being in a connected state, and sending a request for establishing a unicast bearer to the cluster AS (61) via an application layer signaling or an Evolved Packet System, EPS, signaling, wherein, the EPS signaling comprises an air interface signaling and an Evolved Packet Core, EPC, signaling.

5. A user equipment, UE, comprising a judging module (631) and a communicating module (632), wherein:
the judging module (631) is configured to: when the user equipment, UE is currently receiving a cluster service in a multimedia broadcast multicast service, MBMS, bearer, further judge whether it is needed to transmit the cluster service via a unicast bearer;
the communicating module (632) is configured to: when the judging module (631) judges that it is needed to transmit the cluster service via a unicast bearer, send a request for transmitting the cluster service via a unicast bearer to a cluster application server (61), AS, which is a corresponding network side device; if the UE establishes a unicast bearer with the corresponding network side, receive cluster data via the unicast bearer,
wherein the communicating module (632) is configured to stop receiving cluster data in the MBMS bearer if the UE establishes a unicast bearer with the corresponding network side, and the UE being **characterised in that**
the judging module (631) is configured to judge whether it is needed to transmit the cluster service via a unicast bearer in the following manner:
determining that it is needed to transmit the cluster service via a unicast bearer when judging that the following condition is satisfied:
the UE applying to the network for a speaking right, to send uplink data after obtaining the speaking right.

6. The UE of claim 5, wherein,
the communicating module (632) is further configured to:
if the UE does not establish a unicast bearer with the cluster AS (61) which is the corresponding network side device, receive the cluster data via the MBMS bearer,
and the judging module (631) is configured to judge that the UE is currently receiving the cluster service in the MBMS bearer in the following manner:
the judging module judging that the UE is currently receiving the cluster service via the MBMS bearer within the MBMS coverage area.

7. The UE of claim 5 or 6, wherein the communicating module (632) is configured to send a request for transmitting the cluster service via a unicast bearer to the cluster AS (61) in the following manner:
the UE being in a connected state, and sending a request for establishing a unicast bearer to the AS (61) via an application layer signaling or an Evolved Packet System, EPS, signaling, wherein the EPS signaling comprises an air interface signaling and an Evolved Packet Core, EPC, signaling.

## Patentansprüche

1. Cluster-Kommunikationsverfahren, wobei das Verfahren umfasst:
wenn eine Cluster-Benutzervorrichtung (63), UE, aktuell einen Clusterdienst in einem Träger eines Multimedia-Broadcast-Multicast-Service, MBMS, empfängt, Beurteilen durch die Cluster-UE (63), ob es ist erforderlich, den Clusterdienst über einen Unicast-Träger zu senden, und wenn ja, Senden einer Anforderung zum Senden des Clusterdienstes über einen Unicast-Träger an einen netzwerkseitigen Cluster-Anwendungsserver (61), AS; und
nachdem der Cluster-AS (61) die Anforderung der Cluster-UE (63) angenommen hat und wenn der Cluster-AS (61) einen Unicast-Träger mit dem Cluster UE (63) bildet, Empfangen der Clusterdaten durch die Cluster-UE (63)über den Unicast-Träger, wobei,
nachdem der Cluster-AS (61) die Anforderung der Clusters-UE (63) angenommen hat und wenn der Cluster-AS (61)einen Unicast-Träger mit der Cluster-UE (63) bildet, die Cluster-UE (63) den Empfang von Clusterdaten in dem MBMS-Träger stoppt und **dadurch gekennzeichnet ist, dass** der Schritt (102) der Cluster-UE (63) des Beurteilens, ob es erforderlich ist,
den Clusterdienst über einen Unicast-Träger zu senden, umfasst:
Bestimmen durch die Cluster-UE (63), dass es erforderlich ist, den Clusterdienst über einen Unicast-Träger zu senden, wenn sie beurteilt, dass die folgende Bedingung erfüllt ist:
die Cluster-UE (63) beantragt bei dem Netzwerk ein Sprachrecht, um nach dem Erhalten des Sprachrechts Uplink-Daten zu senden.

2. Cluster-Kommunikationsverfahren nach Anspruch 1, wobei das Verfahren ferner umfasst:
wenn der Cluster-Anwendungsserver (61), der eine netzwerkseitige Vorrichtung ist, keinen Unicast-Träger mit der Cluster-UE (63) bildet, die Cluster-UE (63) die Clusterdaten über den MBMS-Träger empfängt.

3. Cluster-Kommunikationsverfahren nach Anspruch 1, wobei ein Clusterdienst in einem MBMS-Träger, den die Cluster-UE (63) aktuell empfängt, betrifft:
einen Clusterdienst, den die Cluster- UE (63) aktuell über den MBMS-Träger innerhalb des MBMS-Abdeckungsbereichs empfängt.

4. Cluster-Kommunikationsverfahren nach Anspruch 1, wobei der Schritt der Cluster-UE (63) des Sendens einer Anforderung zum Senden des Clusterdienstes über einen Unicast-Träger an den Cluster-AS (61) umfasst:
die Cluster-UE (63) befindet sich in einem verbundenen Zustand und sendet eine Anforderung zum Bilden eines Unicast-Trägers an den Cluster-AS (61) über eine Anwendungsschicht-Signalisierung oder eine Signalisierung durch ein Evolved Packet System, EPS, wobei die EPS-Signalisierung eine Luftschnittstellen-Signalisierung und eine Signalisierung durch ein Evolved Packet Core, EPC, umfasst.

5. Benutzervorrichtung, UE, umfassend ein Beurteilungsmodul (631) und ein Kommunikationsmodul (632), wobei:
das Beurteilungsmodul (631) konfiguriert ist, um: wenn die Benutzereinrichtung, UE, aktuell einen Clusterdienst in einem Träger eines Multimedia-Broadcast-Multicast-Service, MBMS, empfängt, ferner zu beurteilen, ob es erforderlich ist, den Clusterdienst über einen Unicast-Träger zu senden;
das Kommunikationsmodul (632) konfiguriert ist, um: wenn das Beurteilungsmodul (631) beurteilt, dass es erforderlich ist, den Clusterdienst über einen Unicast-Träger zu senden, eine Anforderung zum Senden des Clusterdienstes über einen Unicast-Träger an einen Cluster-Anwendungsserver (61), AS, der eine entsprechende netzwerkseitige Vorrichtung ist, zu senden; wenn die UE einen Unicast-Träger mit der entsprechenden Netzwerkseite bildet, Clusterdaten über den Unicast-Träger zu empfangen, wobei
das Kommunikationsmodul (632) dazu konfiguriert ist, den Empfang von Clusterdaten in dem MBMS-Träger zu stoppen, wenn die UE einen Unicast-Träger mit der entsprechenden Netzwerkseite bildet, und die UE **dadurch gekennzeichnet ist, dass**
das Beurteilungsmodul (631) dazu konfiguriert ist, zu beurteilen, ob es erforderlich ist, den Clusterdienst über einen Unicast-Träger in der folgenden Weise zu senden:
Bestimmen, dass es notwendig ist, den Clusterdienst über einen Unicast-Träger zu senden, wenn beurteilt wird, dass die folgende Bedingung erfüllt ist:
die EU beantragt bei dem Netzwerk ein Sprachrecht, um nach dem Erhalten des Sprachrechts Uplink-Daten zu senden.

6. UE nach Anspruch 5, wobei
das Kommunikationsmodul (632) ferner konfiguriert ist, um:
wenn die UE keinen Unicast-Träger mit dem Cluster-AS (61), der die entsprechende netzwerkseitige Vorrichtung ist, bildet, die Clusterdaten über den MBMS-Träger zu empfangen,
und das Beurteilungsmodul (631) dazu konfiguriert ist, zu beurteilen, dass die UE den Clusterdienst aktuell in dem MBMS-Träger auf die folgende Weise empfängt:
das Bewertungsmodul beurteilt, dass die EU den Clusterdienst aktuell über den MBMS-Träger innerhalb des MBMS-Abdeckungsbereichs erhält.

7. UE nach Anspruch 5 oder 6, wobei das Kommunikationsmodul (632) dazu konfiguriert ist, eine Anforderung zum Senden des Clusterdienstes über einen Unicast-Träger an den Cluster-AS (61) in der folgenden Weise zu senden:
die UE befindet sich in einem verbundenen Zustand und sendet einer Anforderung zum Bilden eines Unicast-Trägers an die AS (61) über eine Anwendungsschicht-Signalisierung oder eine Signalisierung durch ein Evolved Packet System, EPS, wobei die EPS-Signalisierung eine Luftschnittstellen-Signalisierung und eine Signalisierung durch Evolved Packet Core, EPC, umfasst.

## Revendications

1. Procédé de communication de groupe, dans lequel le procédé comprend:
lorsqu'un équipement utilisateur, UE, de groupe (63) est en train de recevoir un service de groupe dans un support de service de diffusion multidiffusion multimédia, MBMS, l'UE de groupe (63) détermine s'il est ou non nécessaire de transmettre le service de groupe par l'intermédiaire d'un support monodiffusion, et si tel est le cas, envoie une demande pour transmettre le service de groupe par l'intermédiaire d'un support monodiffusion à un serveur d'application, AS, de groupe (61) au niveau d'un côté de réseau; et
après que l'AS de groupe (61) accepte la demande de l'UE de groupe (63) et si l'AS de groupe (61) établit un support monodiffusion avec l'UE de groupe (63), l'UE de groupe (63) reçoit des données de groupe par l'intermédiaire du support monodiffusion, dans lequel, après que l'AS de groupe (61) accepte la demande de l'UE de groupe (63) et si l'AS de groupe (61) établit un support monodiffusion avec l'UE de groupe (63), l'UE de groupe (63) arrête de recevoir des données de groupe dans le support MBMS, et étant **caractérisé par le fait que**
l'étape (102) de l'UE de groupe (63) déterminant s'il est ou non nécessaire de transmettre le service de groupe par l'intermédiaire d'un support monodiffusion comprend:
l'UE de groupe (63) détermine qu'il est nécessaire de transmettre le service de groupe par l'intermédiaire d'un support monodiffusion lorsqu'il est déterminé que la condition suivante est satisfaite:
l'UE de groupe (63) demande au réseau un droit de parole, pour envoyer des données de liaison montante après l'obtention du droit de parole.

2. Procédé de communication de groupe selon la revendication 1, dans lequel le procédé comprend en outre:
si le serveur d'application de groupe (61) qui est un dispositif côté réseau n'établit pas un support monodiffusion avec l'UE de groupe (63), l'UE de groupe (63) reçoit les données de groupe par l'intermédiaire du support MBMS.

3. Procédé de communication de groupe selon la revendication 1, dans lequel un service de groupe dans un support MBMS que l'UE de groupe (63) est en train de recevoir fait référence à:
un service de groupe que l'UE de groupe (63) est en train de recevoir par l'intermédiaire du support MBMS à l'intérieur de la zone de couverture MBMS.

4. Procédé de communication de groupe selon la revendication 1, dans lequel l'étape d'envoi par l'UE de groupe (63) d'une demande pour transmettre le service de groupe par l'intermédiaire d'un support monodiffusion à l'AS de groupe (61) comprend:
l'UE de groupe (63) est dans un état connecté, et envoie une demande d'établissement d'un support monodiffusion à l'AS de groupe (61) par l'intermédiaire d'une signalisation de couche d'application ou d'une signalisation de système de paquet évolué, EPS, la signalisation d'EPS comprenant une signalisation d'interface radio et une signalisation de coeur de paquet évolué, EPC.

5. Equipement utilisateur, UE, comprenant un module de détermination (631) et un module de communication (632), dans lequel:
le module de détermination (631) est configuré pour: lorsque l'équipement utilisateur, UE, est en train de recevoir un service de groupe dans un support de service de diffusion multidiffusion multimédia, MBMS, déterminer en outre s'il est ou non nécessaire de transmettre le service de groupe par l'intermédiaire d'un support monodiffusion;
le module de communication (632) est configuré pour: lorsque le module de détermination (631) détermine qu'il est nécessaire de transmettre le service de groupe par l'intermédiaire d'un support monodiffusion, envoyer une demande pour transmettre le service de groupe par l'intermédiaire d'un support monodiffusion à un serveur d'application, AS, de groupe (61) qui est un dispositif côté réseau correspondant; si l'UE établit un support monodiffusion avec le côté réseau correspondant, recevoir des données de groupe par l'intermédiaire du support monodiffusion,
le module de communication (632) étant configuré pour arrêter de recevoir des données de groupe dans le support MBMS si l'UE établit un support monodiffusion avec le côté réseau correspondant, et l'UE étant **caractérisé par le fait que**
le module de détermination (631) est configuré pour déterminer s'il est ou non nécessaire de transmettre le service de groupe par l'intermédiaire d'un support monodiffusion de la manière suivante:
déterminer qu'il est nécessaire de transmettre le service de groupe par l'intermédiaire d'un support monodiffusion lors de la détermination du fait que la condition suivante est satisfaite:
l'UE (63) demande au réseau un droit de parole, pour envoyer des données de liaison montante après l'obtention du droit de parole.

6. UE selon la revendication 5, dans lequel
le module de communication (632) est en outre configuré pour:
si l'UE n'établit pas un support monodiffusion avec l'AS de groupe (61) qui est le dispositif côté réseau correspondant, recevoir les données de groupe par l'intermédiaire du support MBMS,
et le module de détermination (631) est configuré pour déterminer que l'UE est en train de recevoir le service de groupe dans le support MBMS de la manière suivante:
le module de détermination détermine que l'UE est en train de recevoir le service de groupe par l'intermédiaire du support MBMS à l'intérieur de la zone de couverture MBMS.

7. UE selon la revendication 5 ou 6, dans lequel le module de communication (632) est configuré pour envoyer une demande pour transmettre le service de groupe par l'intermédiaire d'un support monodiffusion à l'AS de groupe (61) de la manière suivante:
l'UE est dans un état connecté, et envoie une demande d'établissement d'un support monodiffusion à l'AS (61) par l'intermédiaire d'une signalisation de couche d'application ou d'une signalisation de système de paquet évolué, EPS, la signalisation d'EPS comprenant une signalisation d'interface radio et une signalisation de coeur paquet évolué, EPC.
